# EUROPEAN PATENT APPLICATION

(11) **EP 3 512 047 A1**
(43) Date of publication of application: **17.07.2019**
(21) Application number: 17885906.2
(22) Date of filing: 10.05.2017
(51) Int. Cl.: H01R 13/52

(54) **PHOTOVOLTAIC CONNECTOR**

(30) Priority: 26.12.2016 CN 201611219259
(71) Applicant: Jiangsu Tonglin Electric Co., Ltd, Zhenjiang, Jiangsu 212200 (CN)
(72) Inventor: YAN, Rongfei, Zhenjiang Jiangsu 212200 (CN); ZHANG, Daoyuan, Zhenjiang Jiangsu 212200 (CN)
(74) Representative: Kramer Barske Schmidtchen Patentanwälte PartG mbB
(86) International application number: PCT/CN2017/083738
(87) International publication number: WO 2018/120578

(57) **Abstract**

The present invention relates to a photovoltaic connector, comprising a cathode photovoltaic connector and an anode photovoltaic connector; the cathode photovoltaic connector comprises a cathode terminal block, a cathode conductive pin, a cathode cable and a cathode soft rubber base; the anode photovoltaic connector comprises an anode terminal block, an anode conductive casing, an anode cable and an anode soft rubber base. The use of the present invention can effectively avoid performance problems, such as cracking of the nylon nut, thereby effectively lengthening the overall service life of the equipment and the photovoltaic element containing this photovoltaic connector and greatly reducing energy consumption.

## Description

### Technical Field

The present invention relates to a photovoltaic connector, particularly to a thermoplastic elastomeric photovoltaic connector.

### Background Technologies

Along with the vigorous development of photovoltaics, more and more kinds of photovoltaic connectors appear. Plus cost constraint, people's requirements for the performance of connectors are getting stricter. In the existing technologies, sealing is achieved by tightening a nylon nut to squeeze a seal ring. Work of collar installation, rubber seal ring installation, fastener installation and nylon nut tightening needs to be done in the terminal block of the connector, resulting in many steps and large difficulty in operation. The sealing method of tightening a nylon nut to squeeze a seal ring will generate stress inside the connector. When working at outdoor temperature for a long time, the nylon nut under internal stress or external force applied on the site of a photovoltaic power station due to improper operation will have a risk of cracking, which significantly shortens the overall service life of the photovoltaic connector and becomes a technical problem that needs prompt solution from those skilled in the art.

### Summary

To address the foregoing problem, the present invention provides a photovoltaic connector with an exquisite structure, a good use effect, high stability and a higher production and assembly efficiency, which is achieved through the following technical solution:
A photovoltaic connector, comprising a cathode photovoltaic connector and an anode photovoltaic connector; the cathode photovoltaic connector comprises a cathode terminal block, a cathode conductive pin, a cathode cable and a cathode soft rubber base; the cathode terminal block and the cathode soft rubber base both have an internal longitudinal through hole, with one end connected to each other in an abutted manner to form a cathode connecting channel, the cathode conductive pin is connected to the cathode cable in a fixed manner and then is arranged in the first connecting channel, the cable is led out from the other end of the cathode soft rubber base, the cathode conductive pin is arranged inside the through hole of the cathode connecting base in a suspended manner, and a pair of jacks are symmetrically arranged on the sidewall of the end face of the cathode connecting base in the longitudinal direction, are located at an extremity of the cathode connecting base and extend outwards along the radial direction, forming a limiting step surface; the anode photovoltaic connector comprises an anode terminal block, an anode conductive casing, an anode cable and an anode soft rubber base, the anode terminal block and the anode soft rubber base both have an internal longitudinal through hole, with one end connected to each other in an abutted manner to form an anode connecting channel, the anode conductive casing is connected to the anode cable in a fixed manner and then is arranged in the anode connecting channel, the anode cable is led out from the other end of the anode soft rubber base, the anode conductive casing is led out from the through hole of the anode connecting base, the inner diameter of the anode conductive casing is equal to the diameter of the cathode conductive pin, the outer diameter of the anode conductive casing is equal to the diameter of the through hole in the cathode terminal block, and plug pins are symmetrically arranged on the side wall of the end face of the anode connecting base in the longitudinal direction, cock outwardly in an elastic manner and have limiting hooks at extremities; the anode conductive casing is plugged into the through hole of the cathode connecting base, causing the cathode conductive pin to be plugged into the anode conductive casing, the plug pins to be plugged into the jacks and the limiting hooks to push against the limiting step surface, thereby achieving connection between the anode cable and the cathode cable.

As further design of the photovoltaic connector, the cathode photovoltaic connector further comprises a cathode cable fixing seat, a cathode seal ring and a cathode retainer ring; the cathode cable fixing seat 4 and the cathode cable are connected in a fixed and sleeved manner at the joint of the cathode cable and the cathode conductive pin by plastic injection molding method; the inner circle of the cathode seal ring cuddles on the surface of the cathode cable to form a sealing effect; the outer circle of the cathode seal ring is in interference fit with the inner chamber of the cathode terminal block to form a sealing effect; the cathode retainer ring is connected to the cathode cable in a sleeved manner and pushes against one side of the cathode seal ring, the cathode seal ring pushes against one side of the cathode cable fixing seat, and the cathode retainer ring is connected to the cathode connecting base via a snap joint in a fixed manner, thereby preventing axial displacement of the cathode seal ring on the cathode cable.

As further design of the photovoltaic connector, a limiting slot is adopted between the cathode cable fixing seat and the cathode terminal block 1 to prevent rotation of the cable.

As further design of the photovoltaic connector, a connecting method of elastomer injection molding is adopted between the cathode terminal block and the cathode soft rubber base.

As further design of the photovoltaic connector, a connecting method of riveting or electric resistance welding or soldering is adopted for fixed connection between the cathode conductive pin and the cable 3.

As further design of the photovoltaic connector, the anode photovoltaic connector further comprises an anode cable fixing seat, an anode seal ring and an anode retainer ring; the anode cable fixing seat and the anode cable are connected in a fixed and sleeved manner at the joint of the anode cable and the cathode conductive pin; the inner circle of the anode seal ring cuddles on the surface of the anode cable to form a sealing effect; the outer circle of the anode seal ring is in interference fit with the inner chamber of the anode terminal block to form a sealing effect; the anode retainer ring is connected to the anode cable in a sleeved manner and pushes against one side of the anode seal ring, the anode seal ring pushes against one side of the anode cable fixing seat, and the anode retainer ring is connected to the anode connecting base via a snap joint in a fixed manner, thereby preventing axial displacement of the anode seal ring on the anode cable.

As further design of the photovoltaic connector, a limiting slot is adopted between the anode cable fixing seat and the anode terminal block to prevent rotation of the cable.

As further design of the photovoltaic connector, a connecting method of elastomer injection molding is adopted between the anode terminal block and the anode soft rubber base.

As further design of the photovoltaic connector, a connecting method of riveting or electric resistance welding or soldering is adopted for fixed connection between the anode conductive casing and the anode cable.

The use of the present invention can effectively avoid performance problems, such as cracking of the nylon nut, thereby effectively lengthening the overall service life of the equipment and the photovoltaic element containing this photovoltaic connector and greatly reducing energy consumption.

### Brief Description of the Drawings

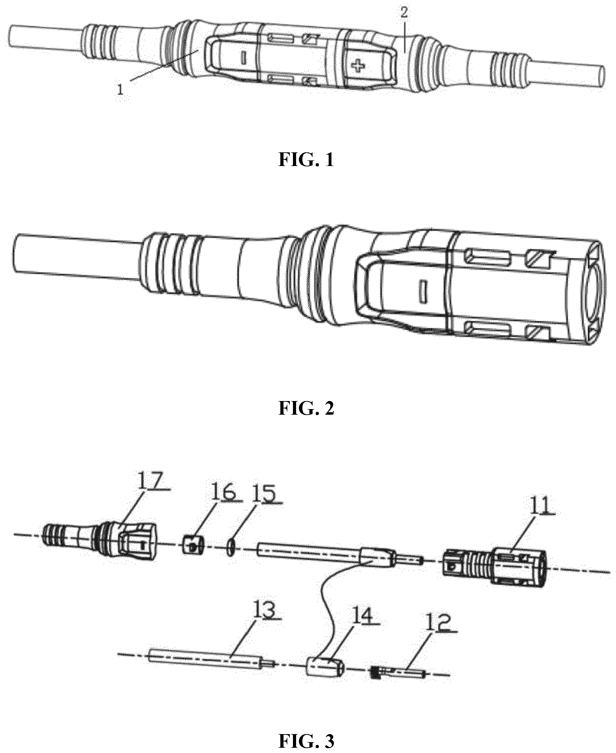

FIG. 1 is an overall structural schematic diagram according to an embodiment of the present invention.
FIG. 2 is a structural schematic diagram of a cathode photovoltaic connector.
FIG. 3 is a detail drawing of a cathode photovoltaic connector.

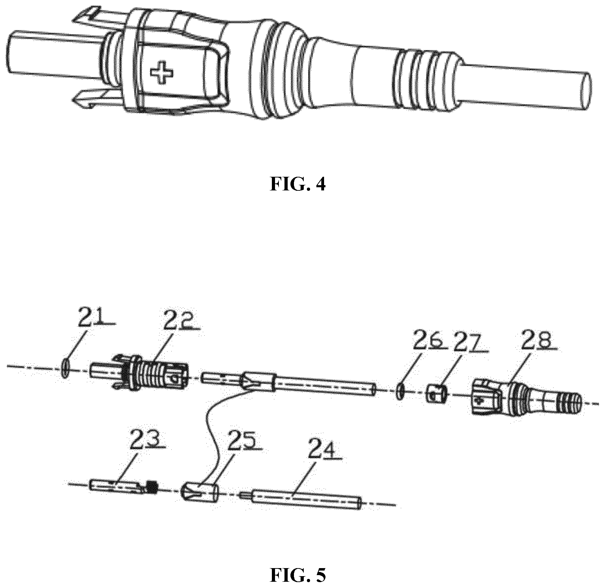

FIG. 4 is a structural schematic diagram of an anode photovoltaic connector.
FIG. 5 is a detail drawing of an anode photovoltaic connector.

### Detailed Description

The present invention will now be further described by referring to the accompanying drawings and embodiments of the Description:
As shown in the diagrams, the photovoltaic connector comprises a cathode photovoltaic connector 1 and an anode photovoltaic connector 2; the cathode photovoltaic connector comprises a cathode terminal block 11, a cathode conductive pin 12, a cathode cable 13 and a cathode soft rubber base 17; the cathode terminal block and the cathode soft rubber base both have an internal longitudinal through hole, with one end connected to each other in an abutted manner to form a cathode connecting channel, the cathode conductive pin is connected to the cathode cable in a fixed manner and then is arranged in the first connecting channel, the cable is led out from the other end of the cathode soft rubber base, the cathode conductive pin is arranged inside the through hole of the cathode connecting base in a suspended manner, and a pair of jacks are symmetrically arranged on the sidewall of the end face of the cathode connecting base in the longitudinal direction, are located at an extremity of the cathode connecting base and extend outwards along the radial direction, forming a limiting step surface; the anode photovoltaic connector comprises an anode terminal block 22, an anode conductive casing 23, an anode cable 24 and an anode soft rubber base 28, the anode terminal block and the anode soft rubber base both have an internal longitudinal through hole, with one end connected to each other in an abutted manner to form an anode connecting channel, the anode conductive casing is connected to the anode cable in a fixed manner and then is arranged in the anode connecting channel, the anode cable is led out from the other end of the anode soft rubber base, the front end of the anode connecting base has a pipeline extending outwards in the longitudinal direction, the anode conductive casing is plugged into the pipeline, the inner diameter of the anode conductive casing is equal to the diameter of the cathode conductive pin, the outer diameter of the pipeline is equal to the diameter of the through hole in the cathode terminal block, and plug pins are symmetrically arranged on the side wall of the end face of the anode connecting base in the longitudinal direction, cock outwardly in an elastic manner and have limiting hooks at extremities; the pipeline and the anode conductive casing are plugged into the through hole of the cathode connecting base, causing the cathode conductive pin to be plugged into the anode conductive casing, the plug pins to be plugged into the jacks and the limiting hooks to push against the limiting step surface, thereby achieving connection between the anode cable and the cathode cable.

The cathode photovoltaic connector further comprises a cathode cable fixing seat 14, a cathode seal ring 15 and a cathode retainer ring 16; the cathode cable fixing seat 14 and the cathode cable are connected in a fixed and sleeved manner at the joint of the cathode cable and the cathode conductive pin by plastic injection molding method; the inner circle of the cathode seal ring cuddles on the surface of the cathode cable to form a sealing effect; the outer circle of the cathode seal ring 15 is in interference fit with the inner chamber of the cathode terminal block 11 to form a sealing effect; the cathode retainer ring is connected to the cathode cable in a sleeved manner and pushes against one side of the cathode seal ring, the cathode seal ring pushes against one side of the cathode cable fixing seat, and the cathode retainer ring is connected to the cathode connecting base via a snap joint in a fixed manner, thereby preventing axial displacement of the cathode seal ring on the cathode cable.

A limiting slot is adopted between the cathode cable fixing seat and the cathode terminal block 11 to prevent rotation of the cable. A connecting method of elastomer injection molding is adopted between the cathode terminal block 11 and the cathode soft rubber base 17. A connecting method of riveting or electric resistance welding or soldering is adopted for fixed connection between the cathode conductive pin 12 and the cable 13.

The anode photovoltaic connector further comprises an O-shaped seal ring 21, an anode cable fixing seat 25, an anode seal ring 26 and an anode retainer ring 27; the anode cable fixing seat 25 and the anode cable 24 are connected in a fixed and sleeved manner at the joint of the anode cable and the cathode conductive pin; the inner circle of the anode seal ring cuddles on the surface of the anode cable to form a sealing effect; the outer circle of the anode seal ring 25 is in interference fit with the inner chamber of the anode terminal block 22 to form a sealing effect; the anode retainer ring is connected to the anode cable in a sleeved manner and pushes against one side of the anode seal ring, the anode seal ring pushes against one side of the anode cable fixing seat, and the anode retainer ring is connected to the anode connecting base via a snap joint in a fixed manner, thereby preventing axial displacement of the anode seal ring on the anode cable.

The O-shaped seal ring 21 is braceleted on the pipeline on the anode terminal block to form a sealing effect between the anode terminal block and the cathode terminal block; a limiting slot is adopted between the anode cable fixing seat and the anode terminal block to prevent rotation of the cable. A connecting method of elastomer injection molding is adopted between the anode terminal block and the anode soft rubber base. A connecting method of riveting or electric resistance welding or soldering is adopted for fixed connection between the anode conductive casing and the anode cable.

The use of the present invention can effectively avoid performance problems, such as cracking of the nylon nut, thereby effectively lengthening the overall service life of the equipment and the photovoltaic element containing this photovoltaic connector and greatly reducing energy consumption.

## Claims

1. A photovoltaic connector, wherein it comprises a cathode photovoltaic connector and an anode photovoltaic connector; the cathode photovoltaic connector comprises a cathode terminal block, a cathode conductive pin, a cathode cable and a cathode soft rubber base; the cathode terminal block and the cathode soft rubber base both have an internal longitudinal through hole, with one end connected to each other in an abutted manner to form a cathode connecting channel, the cathode conductive pin is connected to the cathode cable in a fixed manner and then is arranged in the first connecting channel, the cable is led out from the other end of the cathode soft rubber base, the cathode conductive pin is arranged inside the through hole of the cathode connecting base in a suspended manner, and a pair of jacks are symmetrically arranged on the sidewall of the end face of the cathode connecting base in the longitudinal direction, are located at an extremity of the cathode connecting base and extend outwards along the radial direction, forming a limiting step surface; the anode photovoltaic connector comprises an anode terminal block, an anode conductive casing, an anode cable and an anode soft rubber base, the anode terminal block and the anode soft rubber base both have an internal longitudinal through hole, with one end connected to each other in an abutted manner to form an anode connecting channel, the anode conductive casing is connected to the anode cable in a fixed manner and then is arranged in the anode connecting channel, the anode cable is led out from the other end of the anode soft rubber base, the front end of the anode connecting base has a pipeline extending outwards in the longitudinal direction, the anode conductive casing is plugged into the pipeline, the inner diameter of the anode conductive casing is equal to the diameter of the cathode conductive pin, the outer diameter of the pipeline is equal to the diameter of the through hole in the cathode terminal block, and plug pins are symmetrically arranged on the side wall of the end face of the anode connecting base in the longitudinal direction, cock outwardly in an elastic manner and have limiting hooks at extremities; the pipeline and the anode conductive casing are plugged into the through hole of the cathode connecting base, causing the cathode conductive pin to be plugged into the anode conductive casing, the plug pins to be plugged into the jacks and the limiting hooks to push against the limiting step surface, thereby achieving connection between the anode cable and the cathode cable.

2. The photovoltaic connector according to claim 1, wherein the cathode photovoltaic connector further comprises a cathode cable fixing seat, a cathode seal ring and a cathode retainer ring; the cathode cable fixing seat and the cathode cable are connected in a fixed and sleeved manner at the joint of the cathode cable and the cathode conductive pin by plastic injection molding method; the inner circle of the cathode seal ring cuddles on the surface of the cathode cable to form a sealing effect; the outer circle of the cathode seal ring 4 is in interference fit with the inner chamber of the cathode terminal block to form a sealing effect; the cathode retainer ring is connected to the cathode cable in a sleeved manner and pushes against one side of the cathode seal ring, the cathode seal ring pushes against one side of the cathode cable fixing seat, and the cathode retainer ring is connected to the cathode connecting base via a snap joint in a fixed manner, thereby preventing axial displacement of the cathode seal ring on the cathode cable.

3. The photovoltaic connector according to claim 1, wherein a limiting slot is adopted between the cathode cable fixing seat and the cathode terminal block to prevent rotation of the cable.

4. The photovoltaic connector according to claim 1, wherein a connecting method of elastomer injection molding is adopted between the cathode terminal block and the cathode soft rubber base.

5. The photovoltaic connector according to claim 1, wherein a connecting method of riveting or electric resistance welding or soldering is adopted for fixed connection between the cathode conductive pin and the cathode cable.

6. The photovoltaic connector according to claim 1, wherein the anode photovoltaic connector further comprises an anode cable fixing seat, an anode seal ring and an anode retainer ring; the anode cable fixing seat and the anode cable are connected in a fixed and sleeved manner at the joint of the anode cable and the cathode conductive pin; the inner circle of the anode seal ring cuddles on the surface of the anode cable to form a sealing effect; the outer circle of the anode seal ring is in interference fit with the inner chamber of the anode terminal block to form a sealing effect; the anode retainer ring is connected to the anode cable in a sleeved manner and pushes against one side of the anode seal ring, the anode seal ring pushes against one side of the anode cable fixing seat, and the anode retainer ring is connected to the anode connecting base via a snap joint in a fixed manner, thereby preventing axial displacement of the anode seal ring on the anode cable.

7. The photovoltaic connector according to claim 1, wherein a limiting slot is adopted between the anode cable fixing seat and the anode terminal block to prevent rotation of the cable.

8. The photovoltaic connector according to claim 1, wherein a connecting method of elastomer injection molding is adopted between the anode terminal block and the anode soft rubber base.

9. The photovoltaic connector according to claim 1, wherein a connecting method of riveting or electric resistance welding or soldering is adopted for fixed connection between the anode conductive casing and the anode cable.
